# EUROPÄISCHE PATENTSCHRIFT

(11) **EP 3 580 801 B1**
(45) Veröffentlichungstag und Bekanntmachung des Hinweises auf die Patenterteilung: **27.01.2021**
(21) Anmeldenummer: 18703995.3
(22) Anmeldetag: 08.02.2018
(51) Int. Cl.: H01M 8/04225, F23D 14/18, F23D 14/66, H01M 8/04014, H01M 8/0432, H01M 8/04302, H01M 8/0612, H01M 8/0662

(54) **STARTBRENNER FÜR EIN BRENNSTOFFZELLENSYSTEM**
IGNITION BURNER FOR A FUEL CELL SYSTEM
BRÛLEUR DE DÉMARRAGE POUR UN SYSTÈME À PILE À COMBUSTIBLE

(30) Priorität: 09.02.2017 AT 501092017; 09.02.2017 AT 501082017
(43) Veröffentlichungstag der Anmeldung: 18.12.2019
(73) Patentinhaber: AVL List GmbH, 8020 Graz (AT); Nissan Motor Co., Ltd., Kanagawa 220-8686 (JP)
(72) Erfinder: MATHÉ, Jörg, 8020 Graz (AT); REISSIG, Michael, 8010 Graz (AT); KRAUSS, Thomas, 8010 Graz (AT); MAKINSON, Julian, 8044 Graz (AT); REITER, Bernd, 8010 Kainbach bei Graz (AT); LAWLOR, Vincent, 8054 Graz (AT); YAGUCHI, Tatsuya, Yokohama-shi Kanagawa 224-0045 (JP); NODA, Tetsushi, Yokohama-shi Kanagawa 236-0022 (JP); SHIOMI, Takeshi, Yokosuka-shi Kanagawa 237-0079 (JP)
(74) Vertreter: Wietzke, Andreas
(86) Internationale Anmeldenummer: PCT/EP2018/053124
(87) Internationale Veröffentlichungsnummer: WO 2018/146172

(56) Entgegenhaltungen:
- EP-A1- 1 693 916
- EP-A2- 0 924 786
- WO-A1-03/060380
- WO-A1-2014/117952
- US-A- 5 110 563
- US-B1- 6 306 531

## Beschreibung

Die vorliegende Erfindung betrifft einen Startbrenner für ein Brennstoffzellensystem, insbesondere ein SOFC-System, ein Brennstoffzellensystem mit einem Startbrenner sowie ein Verfahren zum Erwärmen eines Betriebsfluids in einem Brennstoffzellensystem.

Im Stand der Technik sind verschiedene Startbrenner für verschiedene Brennstoffzellensysteme bekannt. Aus der DE 102 37 744 A1 geht ein Brennstoffzellensystem mit einem Startbrenner hervor, der in einem Brennergehäuse eingebaut ist. In dem Brennergehäuse kann Bypass-Luft außen am Startbrenner entlang strömen, bevor sie zusammen mit aus dem Startbrenner austretendem Heißgas in eine Mischzone eintritt. In der Mischzone wird die Bypass-Luft möglichst homogen mit dem Heißgas vermischt, um als temperaturgeregelter Heißgasstrom auszutreten und das Brennstoffzellensystem zu erwärmen. Eine Temperaturregelung kann durch entsprechende Dosierung der zugeführten Bypass-Luft und ggf. zusätzlich durch geeignete Dosierung der Luft und des Brennstoffs, beispielsweise kohlenwasserstoffhaltiger Brennstoff, die dem Startbrenner zugeführt werden, durchgeführt werden. Durch die Führung der Bypass-Luft entlang des Startbrenners kann die Umgebung des Startbrenners vor der im Startbrenner erzeugten Hitze geschützt werden. Gleichwohl wird der Startbrenner durch die dargestellte Führung der Bypass-Luft gekühlt und aus der in Rede stehenden Patentanmeldung geht keine Lösung hervor, wie diesem Problem Rechnung getragen werden könnte.

DE 100 55 613 A1 zeigt einen Startbrenner in einem Brennstoffzellensystem, wobei der Startbrenner in Form eines Zweirohrbrenners ausgestaltet ist. Der Zweirohrbrenner weist zwei konzentrisch zueinander angeordnete Rohrleitungsabschnitte, also einen inneren und einen äußeren Rohrleitungsabschnitt, auf. Stromaufwärts des inneren Rohrleitungsabschnitts ist ein Brennstoffinjektor zum Einspritzen von Brennstoff in den inneren Rohrleitungsabschnitt angeordnet. Innerhalb des inneren Rohrleitungsabschnitts befindet sich eine Zündkerze zum Zünden des vom Brennstoffinjektor in den inneren Rohrleitungsabschnitt eingespritzten Brennstoffs. Stromabwärts des inneren Rohrleitungsabschnitts kann ein katalytischer Reaktor angeordnet sein. Durch das Umströmen des inneren Rohrleitungsabschnitts mit Luft kann eine thermisehe Isolierung des heißen inneren Rohrleitungsabschnitts realisiert werden. Allerdings ist es auch bei diesem System problematisch, dass die Luft, die dem inneren Rohrleitungssystem für die Verbrennung darin zugeführt wird, relativ kalt ist. Ein separates Vorheizen der zugeführten Luft wäre mit entsprechenden Zusatzkosten und einem Effizienzverlust hinsichtlich des Betriebs des Startbrenners bzw. des Brennstoffzellensystems verbunden.

WO 03/060380 A1 offenbart einen katalytischen Brenner für ein Brennstoffzellensystem. In diesem wird außerhalb eines Katalysators entlang einer Katalysatorwandung ein Betriebsfluid entgegengesetzt zu einem Betriebsfluid innerhalb des Katalysators geführt.

Aufgabe der vorliegenden Erfindung ist es, die voranstehend beschriebenen Nachteile zumindest teilweise zu beheben. Insbesondere ist es Aufgabe der vorliegenden Erfindung, einen verbesserten Startbrenner zum Vorheizen eines Brennstoffzellensystems zur Verfügung zu stellen.

Die voranstehende Aufgabe wird durch die Patentansprüche gelöst. Insbesondere wird die voranstehende Aufgabe durch den Startbrenner gemäß Anspruch 1, das Brennstoffzellensystem gemäß Anspruch 13 sowie das Verfahren gemäß Anspruch 14 gelöst. Weitere Vorteile der Erfindung ergeben sich aus den Unteransprüchen, der Beschreibung und den Zeichnungen. Dabei gelten Merkmale und Details, die im Zusammenhang mit dem Startbrenner beschrieben sind, selbstverständlich auch im Zusammenhang mit dem erfindungsgemäßen Brennstoffzellensystem, dem erfindungsgemäßen Verfahren und jeweils umgekehrt, sodass bezüglich der Offenbarung zu den einzelnen Erfindungsaspekten stets wechselseitig Bezug genommen wird bzw. werden kann.

Gemäß eines ersten Aspekts der vorliegenden Erfindung wird ein Startbrenner für ein Brennstoffzellensystem, insbesondere für ein SOFC-System (SOFC steht für "solid oxide fuel cell", bzw. Festoxidbrennstoffzelle), zur Verfügung gestellt. Der Startbrenner weist einen Katalysator mit einem Katalysatoreingang und einem Katalysatorausgang auf, wobei zwischen dem Katalysatoreingang und dem Katalysatorausgang ein Katalysebereich ausgestaltet ist und der Katalysebereich in einer Durchgangsrichtung vom Katalysatoreingang zum Katalysatorausgang von einer Katalysatorwandung umgeben ist. Der Startbrenner weist ferner einen Betriebsfluid-Leitabschnitt zum Zuführen eines Betriebsfluids zu dem Katalysatoreingang auf. Erfindungsgemäß ist der Betriebsfluid-Leitabschnitt außerhalb des Katalysators zumindest abschnittsweise entlang der Katalysatorwandung angeordnet.

Der Betriebsfluid-Leitabschnitt ist somit zum Leiten des Betriebsfluids außerhalb des Katalysators entlang der Katalysatorwandung in Richtung des Katalysatoreingangs ausgestaltet. Dadurch ist es möglich, Betriebsfluid, beispielsweise in Form von Luft, entlang der Katalysatorwandung bzw. entlang eines Außenwandabschnitts der Katalysatorwandung in Richtung des Katalysatoreingangs zu leiten. Dadurch kann eine vorteilhafte thermische Isolationsschicht gebildet werden, durch welche die Umgebung des Katalysators vor der im Katalysator entstehenden Hitze geschützt werden kann. Darüber hinaus kann die an der Katalysatorwandung entlanggeführte Luft durch den Katalysator erwärmt werden. Diese Wärme wird bei dem erfindungsgemäßen Startbrenner in den Katalysator transportiert. Dies führt zu einer effizienten Verbrennung im Katalysator. Im Rahmen der vorliegenden Erfindung hat sich überraschend herausgestellt, dass das Erwärmen des Betriebsfluids bzw. der Luft durch den Katalysator keinen oder kaum einen negativen Effekt auf die Verbrennung im Katalysator hat. D.h., die Vorteile die daraus resultieren, dass dem Katalysator das erwärmte Betriebsfluid zugeführt wird, überwiegen eindeutig die möglichen Nachteilen die daraus resultieren könnten, dass der Katalysator durch das vorbeigeleitete Betriebsfluid gekühlt wird. Demnach kann der Betriebsfluid-Leitabschnitt im erfindungsgemäßen Startbrenner die vorstehend erwähnte vorteilhafte Doppelfunktion erfüllen.

Durch das erfindungsgemäße Vorheizen des Betriebsfluids stromaufwärts des Katalysators kann der Katalysators mit einem besonders hohen Wirkungsgrad betrieben werden. Entsprechend hoch ist die durch den Katalysator erzeugbare Wärmeleistung.

Durch die Anordnung des Betriebsfluid-Leitabschnitts außerhalb des Katalysators entlang der Katalysatorwandung bzw. seitlich am Katalysator kann der Startbrenner besonders kompakt bereitgestellt werden. Dies ist insbesondere bei mobilen Anwendungen des Startbrenners, beispielsweise im Automobilbereich, von Vorteil.

Unter dem Startbrenner ist vorliegend insbesondere ein Startbrenner zum Erwärmen eines Nachbrenners des Brennstoffzellensystems, der wiederum zum Erwärmen eines Reformers des Brennstoffzellensystems bereitgestellt ist, zu verstehen. Bei einem Kaltstart des Brennstoffzellensystems, wenn der Nachbrenner noch kalt ist und somit nicht zum Erwärmen eines Reformers des Brennstoffzellensystems geeignet ist, kann durch den Startbrenner der Nachbrenner vorgeheizt werden. Sobald der Nachbrenner durch den Betrieb des Brennstoffzellensystems auf Betriebstemperatur ist, kann der Startbrenner deaktiviert werden.

Aufgrund des verwendeten Katalysators im Startbrenner kann auf zusätzliche Zündmittel, beispielsweise in Form einer Zündkerze, verzichtet werden. Dadurch können entsprechende Kosten gespart werden.

Die Katalysatorwandung muss nicht direkt an den Katalysebereich angrenzen. D.h., es ist möglich, dass zumindest abschnittsweise ein Zwischenraum zwischen dem Katalysebereich und der Katalysatorwandung bzw. einem Innenwandabschnitt der Katalysatorwandung ausgestaltet ist.

Der Betriebsfluid-Leitabschnitt ist vorzugsweise entlang eines Außenwandabschnitts der Katalysatorwandung angeordnet. Der Außenwandabschnitt des Katalysators kann in diesem Fall einen Innenwandabschnitt des Betriebsfluid-Leitabschnitts darstellen. Gleichwohl ist es erfindungsgemäß möglich, dass ein Außenwandabschnitt des Betriebsfluid-Leitabschnitts am Außenwandabschnitt der Katalysatorwandung oder sogar leicht beabstandet von der Katalysatorwandung angeordnet ist. Abhängig von der Anwendungsvariante des erfindungsgemäßen Startbrenners kann dieser durch seinen Systemaufbau auf einfache Weise gleichzeitig als Nachbrenner verwendet bzw. betrieben werden.

Gemäß einer Weiterbildung der vorliegenden Erfindung ist es möglich, dass der Betriebsfluid-Leitabschnitt entlang der Katalysatorwandung eine Leitrichtung für das Betriebsfluid vorgibt, wobei die Leitrichtung zumindest abschnittsweise parallel oder im spitzen Winkel und entgegengesetzt zur Durchgangsrichtung verläuft. D.h., der Betriebsfluid-Leitabschnitt ist zum Leiten des Betriebsfluids entlang und/oder neben der Katalysatorwandung und in Richtung des Katalysatoreingangs ausgestaltet. Dies ermöglicht ein effizientes Aufwärmen bzw. Vorheizen des Betriebsfluids bei kompakter Bauweise des Startbrenners, insbesondere in dem Fall, dass die Leitrichtung parallel oder im Wesentlichen parallel zur Durchgangsrichtung verläuft. Der Betriebsfluid-Leitabschnitt gibt die Leitrichtung für das Betriebsfluid bevorzugt entlang eines Außenwandabschnitts der Katalysatorwandung vor. Der Betriebsfluid-Leitabschnitt ist vorzugsweise zumindest von einem Bereich am Katalysatorausgang bis zu einem Bereich am Katalysatoreingang entlang der Katalysatorwandung ausgestaltet. D.h., der Betriebsfluid-Leitabschnitt ist derart entlang der Katalysatorwandung ausgestaltet, dass Betriebsfluid im Bereich des Katalysatorausgangs an die Katalysatorwandung bzw. einen Außenwandabschnitt der Katalysatorwandung und von dort aus an der Katalysatorwandung entlang oder neben dieser in Richtung des Katalysatoreingangs leitbar ist. Demnach gibt der Betriebsfluid-Leitabschnitt für das Betriebsfluid eine Leitrichtung vor, die außerhalb des Katalysators und entlang der Katalysatorwandung entgegengesetzt oder zumindest im Wesentlichen oder teilweise entgegengesetzt zur Durchgangsrichtung, insbesondere von dem Bereich am Katalysatorausgang zu dem Bereich am Katalysatoreingang, verläuft.

Von weiterem Vorteil kann es sein, wenn bei einem erfindungsgemäßen Startbrenner die Katalysatorwandung zumindest abschnittsweise in Form eines Hohlzylinders ausgestaltet ist und der Betriebsfluid-Leitabschnitt wenigstens teilweise ringförmig, zumindest abschnittsweise um die Katalysatorwandung herum, ausgestaltet ist. Durch die ringförmige Ausgestaltung des Betriebsfluid-Leitabschnitts um die Katalysatorwandung herum kann, sobald das Betriebsfluid durch den Betriebsfluid-Leitabschnitt geleitet wird, eine Wärmeentwicklung im Katalysator wirkungsvoll von der Umgebung des Katalysators abgeschirmt werden. Außerdem kann durch die ringförmige Ausgestaltung des Betriebsfluid-Leitabschnitts ein großer Kontaktbereich bzw. eine große Kontaktfläche zwischen dem Betriebsfluid-Leitabschnitt und der Katalysatorwandung bereitgestellt werden. Dadurch kann das Betriebsfluid über eine entsprechend große Fläche erwärmt werden, wenn es in Richtung des Katalysatoreingangs geleitet wird. Dadurch ist ein effektives Vorheizen des Betriebsfluids möglich. Der Katalysator und der Betriebsfluid-Leitabschnitt sind sozusagen zumindest abschnittsweise konzentrisch oder im Wesentlichen konzentrisch zueinander angeordnet. Die Ringform ist vorliegenden nicht auf eine kreisrunde Ringform beschränkt. So kann der Betriebsfluid-Leitabschnitt auch elliptisch oder eckig ringförmig um die Katalysatorwandung bzw. zumindest teilweise um die Katalysatorwandung herum ausgestaltet sein. Unter der teilweise ringförmigen Ausgestaltung kann eine U- oder C-förmige Ausgestaltung des Betriebsfluid-Leitabschnitts verstanden werden.

Außerdem ist es möglich, dass bei einem erfindungsgemäßen Startbrenner der Betriebsfluid-Leitabschnitt zumindest abschnittsweise direkt oder im Wesentlichen direkt an der Katalysatorwandung angeordnet ist oder die Katalysatorwandung als Trennwand zwischen dem Betriebsfluid-Leitabschnitt und dem Katalysebereich ausgestaltet ist. Dadurch wird der Startbrenner besonders platzsparend bereitgestellt. Falls die Katalysatorwandung als Trennwand zwischen dem Betriebsfluid-Leitabschnitt und dem Katalysebereich ausgestaltet ist, kann auf einen Wandabschnitt im Betriebsfluidleitabschnitt verzichtet werden. Dadurch kann der Startbrenner nicht nur kompakt, sondern auch mit geringem Gewicht sowie entsprechend kostengünstig zur Verfügung gestellt werden. In diesem Fall kann der Betriebsfluid-Leitabschnitt als Bestandteil eines Gehäusekörpers bereitgestellt werden, in welchem sich der Katalysator zumindest teilweise befindet. Unter einer direkten Anordnung des Betriebsfluid-Leitabschnitts an der Katalysatorwandung kann im vorliegenden Fall verstanden werden, dass der Betriebsfluid-Leitabschnitt direkt oder im Wesentlichen direkt an der Katalysatorwandung verläuft oder sich dort entlang erstreckt.

Im Rahmen der vorliegenden Erfindung ist es ferner möglich, dass bei einem Startbrenner der Betriebsfluid-Leitabschnitt einen Strömungsquerschnitt zum Leiten des Betriebsfluids aufweist, wobei innerhalb des Strömungsquerschnitts wenigstens ein Fluidführungselement zur definierten Strömungsbeeinflussung des Betriebsfluids im Betriebsfluid-Leitabschnitt ausgestaltet ist. Durch gezielte Strömungsbeeinflussung ist es möglich, ein besonders homogenes und turbulenzenfreies oder zumindest turbulenzenreduziertes Einströmung des Betriebsfluids in den Katalysator bzw. den Katalysatoreingang zu realisieren.

Bei einem erfindungsgemäßen Startbrenner wird stromaufwärts des Katalysatoreingangs ein weiteres Betriebsfluid, insbesondere ein Brennstoff, in eine Mischkammer eingespritzt. In die Mischkammer wird außerdem das Betriebsfluid, insbesondere in Form von Luft oder einem anderen sauerstoffhaltigen Fluid, geleitet. Durch die Fluidführungselemente kann eine turbulenzenfreie oder zumindest turbulenzenreduzierte Einströmung des Betriebsfluids in die Mischkammer realisiert werden, wodurch eine vorteilhafte Durchmischung des Betriebsfluids mit dem weiteren Betriebsfluid sowie eine breitflächige Anströmung des Katalysatoreingangs ermöglicht werden. Unter dem Strömungsquerschnitt ist grundsätzlich ein zumindest abschnittsweise freier Strömungsquerschnitt zu verstehen. Die Fläche des Strömungsquerschnitts ist im Bereich des wenigstens einen Fluidführungselements demnach um den entsprechenden Querschnitt des Fluidführungselements reduziert. Der Startbrenner weist vorzugsweise einen Grundkörper auf, der sich außerhalb des Katalysators zumindest abschnittsweise in Längsrichtung der Katalysatorwandung, von dieser beabstandet, erstreckt. Der Strömungsquerschnitt wird vorzugsweise in einem Bereich zwischen der Katalysatorwandung, insbesondere eines Außenwandabschnitts der Katalysatorwandung, und einem Innenwandabschnitt des Grundkörpers gebildet. Ferner ist es möglich, dass der Strömungsquerschnitt nur innerhalb des Grundkörpers gebildet ist. In diesem Fall ist ein Wandabschnitt des Grundkörpers benachbart zur Katalysatorwandung bzw. zum Außenwandabschnitt der Katalysatorwandung angeordnet. Das wenigstens eine Fluidführungselement ist vorzugsweise rippenförmig, insbesondere plattenförmig, ausgestaltet. Im Rahmen der vorliegenden Erfindung hat sich herausgestellt, dass diese Form zu einer besonders vorteilhaften Strömungsbeeinflussung des Betriebsfluids führt.

Von weiterem Vorteil kann es sein, wenn bei einem erfindungsgemäßen Startbrenner das Fluidführungselement an der Katalysatorwandung ausgestaltet ist, insbesondere als integraler Bestandteil der Katalysatorwandung. D. h., das wenigstens eine Fluidführungselement ist nicht als separates Bauteil neben dem Katalysator und dem Betriebsfluid-Leitabschnitt bereitgestellt. Dadurch kann der Startbrenner besonders leicht montiert und im Falle eines Fehlers oder einer Reparatur demontiert werden. Dadurch, dass das wenigstens eine Fluidführungselement integraler Bestandteil der Katalysatorwandung ist, kann auf weitere Montageteile zur Befestigung des wenigstens einen Fluidführungselements im Startbrenner verzichtet werden. Dadurch können entsprechende Kosten gespart werden. Außerdem führt die Reduzierung von Bauteilen zu einem entsprechend geringen logistischen Aufwand. Auch dies führt zu einer entsprechenden Kostenersparnis.

Im Rahmen der vorliegenden Erfindung ist es ferner möglich, dass das wenigstens eine Fluidführungselement als integraler Bestandteil eines Grundkörpers ausgestaltet ist, durch welchen der Betriebsfluid-Leitabschnitt gebildet wird, in welchem der Katalysator zumindest teilweise angeordnet ist und/oder welcher den Katalysator zumindest abschnittsweise ringförmig umgibt. Darunter, dass das wenigstens eine Fluidführungselement als integraler Bestandteil der Katalysatorwandung ausgestaltet ist kann verstanden werden, dass das Fluidführungselement monolithischer Bestandteil des Katalysators bzw. der Katalysatorwandung ist. Das wenigstens eine Fluidführungselement kann zusammen mit der Katalysatorwandung als monolithisches Gussteil hergestellt sein. Das wenigstens eine Fluidführungselement kann alternativ stoffschlüssig mit der Katalysatorwandung verbunden sein. So kann das wenigstens eine Fluidführungselement beispielsweise über eine Schweiß- oder Klebenaht an der Katalysatorwandung befestig sein.

Darüber hinaus ist es möglich, dass bei einem erfindungsgemäßen Startbrenner in einer Betriebsfluid-Strömungsrichtung zwischen einem Endabschnitt des Betriebsfluid-Leitabschnitts und dem Katalysatoreingang ein perforierter Trennabschnitt angeordnet ist, durch welchen das Betriebsfluid vom Betriebsfluid-Leitabschnitt in Richtung des Katalysators leitbar ist.

Durch den perforierten Trennabschnitt kann eine besonders homogene, turbulenzenfreie oder im Wesentlichen turbulenzenfreie Einströmung des Betriebsfluids in Richtung des Katalysatoreingangs ermöglicht werden. Zwischen dem perforiertem Trennbereich und dem Katalysatoreingang ist vorzugsweise eine Mischkammer zum Vermischen des Betriebsfluids mit einem weiteren Betriebsfluid angeordnet, wobei das Betriebsfluid über bzw. durch den perforierten Trennabschnitt in die Mischkammer leitbar ist. Entsprechend kann durch den perforierten Trennabschnitt eine besonders homogene, turbulenzenfreie oder im Wesentlichen turbulenzenfreie Einströmung des Betriebsfluids in die Mischkammer ermöglicht werden. Dadurch kann eine gute Vermischung zwischen dem Betriebsfluid, beispielsweise Luft, und dem weiteren Betriebsfluid, beispielsweise einem Brennstoff, erzielt werden. Außerdem kann dadurch eine breitflächige Anströmung des Katalysatoreingangs bzw. eines Eingangsbereichs am Katalysator ermöglicht werden.

Gemäß einer weiteren Ausgestaltungsvariante der vorliegenden Erfindung ist es möglich, dass bei einem Startbrenner der perforierte Trennabschnitt trichterförmig oder im Wesentlichen trichterförmig ausgestaltet ist. Aufgrund der Trichterform kann das Betriebsfluid, das durch den Betriebsfluid-Leitabschnitt vorzugsweise um den Katalysator herum an der Katalysatorwandung entlang Richtung Katalysatoreingang geleitet wird, relativ großflächig sowie unter Vermeidung unerwünschter Turbulenzen durch den Trennabschnitt in Richtung des Katalysatoreingangs geleitet werden. Innerhalb des trichterförmigen Trennabschnitts ist vorzugsweise zumindest abschnittsweise eine Mischkammer zum Vermischen des Betriebsfluids, beispielsweise Luft, mit einem weiteren Betriebsfluid, beispielsweise Brennstoff, ausgestaltet. Die größere Öffnung des trichterförmigen Trennabschnitts ist in diesem Fall in Richtung des Katalysatoreingangs ausgestaltet. Die kleine Öffnung ist in Richtung eines Injektors, der zum Einspritzen des weiteren Betriebsfluids in die Mischkammer angeordnet ist, ausgestaltet. Der trichterförmige Trennabschnitt ist in diesem Fall vorzugsweise entsprechend einem Einspritztrichter des weiteren Betriebsfluids in Richtung des Katalysatoreingangs, bzw. etwas größer als dieser, ausgestaltet. Dadurch kann der zur Verfügung stehende Bauraum im Startbrenner besonders effizient genutzt werden. Der trichterförmige Trennabschnitt ist vorzugsweise koaxial zum Katalysator oder im Wesentlichen koaxial zum Katalysator sowie axial stromaufwärts zum Katalysator angeordnet.

Weiterhin ist es möglich, dass bei einem erfindungsgemäßen Startbrenner der perforierte Trennabschnitt an einen Stirnabschnitt der Katalysatorwandung angrenzt, wobei die Katalysatorwandung in einem Bereich des Katalysatoreingangs einen größeren Querschnitt als der Katalysebereich aufweist und sich die Katalysatorwandung von diesem Bereich in Durchgangsrichtung zumindest über einen Teil des Katalysebereichs beabstandet zum Katalysebereich erstreckt. Dadurch ist es möglich, dass das Betriebsfluid oder ein Betriebsfluidgemisch nicht nur in eine Stirnseite des Katalysators bzw. des Katalysatoreingangs eindringt, sondern auch in einen seitlichen Abschnitt des Katalysebereichs, der orthogonal oder im Wesentlichen orthogonal zur Stirnseite des Katalysators verläuft. Demnach kann ein großer Eintrittsbereich für das Betriebsfluid oder ein Betriebsfluidgemisch geschaffen werden, wodurch der Katalysator besonders effektiv betreibbar ist.

Weiterhin kann es im Rahmen der vorliegenden Erfindung von Vorteil sein, wenn der Betriebsfluid-Leitabschnitt zumindest abschnittsweise als Bestandteil eines Gehäusekörpers des Startbrenners ausgestaltet ist, wobei der perforierte Trennabschnitt als Bestandteil, insbesondere als integraler und/oder monolithischer Bestandteil des Gehäusekörpers, ausgestaltet ist. Dadurch, dass der Betriebsfluid-Leitabschnitt sowie der perforierte Trennabschnitt als integrale bzw. monolithische Bestandteile des Gehäusekörpers ausgestaltet sind, kann der Startbrenner besonders kompakt und zuverlässig zur Verfügung gestellt werden. Wenige Einzelteile führen zu einer einfachen Montage bzw. Demontage des Startbrenners, einem geringen logistischen Aufwand sowie entsprechend geringen Kosten bei der Fertigung und Wartung des Startbrenners.

Außerdem ist es bei einem erfindungsgemäßen Startbrenner möglich, dass wenigstens ein Injektor, der zum Einspritzen eines weiteren Betriebsfluids in eine Mischkammer des Startbrenners stromaufwärts des Katalysatoreingangs ausgestaltet ist, angeordnet ist, wobei die Mischkammer zum Vermischen des Betriebsfluids mit dem weiteren Betriebsfluid angeordnet und ausgestaltet ist. Der Injektor kann als beliebige Düse ausgebildet sein. Durch die Anordnung der Mischkammer stromaufwärts des Katalysators kann ein Betriebsfluidgemisch erzeugt werden, das vor dem Eintreten in den Katalysator durch das aufgewärmte Betriebsfluid vorgeheizt ist. Dadurch kann der Katalysator mit einer besonders hohen Leistung betrieben werden. Das Betriebsfluid ist vorzugsweise Luft, insbesondere aus einem Kompressor oder Umgebungsluft. Das weitere Betriebsfluid ist vorzugsweise ein Brennstoff, insbesondere ein kohlenwasserstoffhaltiges Fluid, beispielsweise Methan oder Ethanol. Gleichwohl ist es im Rahmen der vorliegenden Erfindung möglich, dass das Betriebsfluid der Brennstoff ist und das weitere Betriebsfluid Luft.

Bei einem erfindungsgemäßen Startbrenner kann es von Vorteil sein, wenn die Mischkammer einen Umlenkabschnitt, der zum Umlenken einer Strömungsrichtung des Betriebsfluids von der Leitrichtung in die Durchgangsrichtung ausgestaltet ist, aufweist. Durch den Umlenkabschnitt kann das Betriebsfluid in einem Bereich zwischen 150° und 210°, bevorzugt um 180° oder im Wesentlichen um 180°, von der Leitrichtung in die Durchgangsrichtung umgelenkt werden. Durch den Umlenkabschnitt kann das Betriebsfluid vorteilhaft in Richtung des Katalysatoreingangs geleitet werden. Der Umlenkabschnitt weist vorzugsweise einen Kurvenabschnitt bzw. einen sphärischen Abschnitt auf, durch welchen das Betriebsfluid möglichst reibungsarm in Richtung des Katalysatoreingangs umlenkbar ist. Im Rahmen der vorliegenden Erfindung kann der Umlenkabschnitt zumindest teilweise an einem Endabschnitt des Betriebsfluid-Leitabschnitts, und somit vor und/oder nach dem perforierten Trennabschnitt, ausgestaltet sein. Dadurch kann das Betriebsfluid vorteilhaft in den perforierten Trennabschnitt geleitet werden.

Außerdem ist es möglich, dass bei einem erfindungsgemäßen Startbrenner stromaufwärts des Katalysatoreingangs, insbesondere stromaufwärts des Katalysatoreingangs und stromabwärts der Mischkammer, ein Heizmittel, insbesondere ein elektrisches Heizmittel, zum Erwärmen einer Betriebsfluidmischung aus dem Betriebsfluid und dem weiteren Betriebsfluid angeordnet ist. Durch das Heizmittel ist ein weiteres Vorheizen des Betriebsfluids bzw. der Betriebsfluidmischung möglich. Dadurch kann der Katalysator besonders effektiv und mit entsprechend hoher Leistung betrieben werden. Das Heizmittel ist vorzugsweise plattenförmig ausgestaltet und liegt mit einer der beiden großen Seitenflächen am Katalysatoreingang an. Dadurch ist das Heizmittel besonders platzsparend im Startbrenner angeordnet. Ferner kann das Heizmittel selbst eine katalytische Funktion aufweisen, beispielsweise durch eine katalytische Beschichtung des Heizmittels bzw. dadurch, dass das Heizmittel katalytisches Material aufweist, oder dadurch, dass das Heizmittel aus katalytischem Material oder im Wesentlichen aus katalytischem Material ausgestaltet ist. Unter katalytischem Material ist insbesondere Material zum Fördern und/oder Starten einer katalytischen Verbrennung und/oder Temperierung im und/oder am Heizmittel zu verstehen. Bei Verwendung eines wasserreichen Brennstoffs wie einem Ethanol-WasserGemisch ist das Heizmittel für den gewünschten Heizbetrieb vorzugsweise derart groß dimensioniert, dass trotz Kondensierung von Wassers am Heizmittel die zu erzielende Heizleistung erreicht werden kann. Bei Verwendung von wasserarmen Brennstoffen wie reinem Ethanol oder Diesel kann das Heizmittel entsprechend klein dimensioniert sein. Vorzugsweise weist das Heizmittel den gleichen oder im Wesentlichen den gleichen Querschnitt wie eine Stirnseite des Katalysatoreingangs auf. D. h., das Heizmittel erstreckt sich, bevorzugt plattenförmig, insbesondere über die gesamte Stirnseite des Katalysators bzw. des Katalysatoreingangs. Mit anderen Worten, eine der beiden Seitenflächen ist vorzugsweise deckungsgleich oder im Wesentlichen deckungsgleich mit der Stirnseite des Katalysators. Dadurch kann das Betriebsfluid bzw. das Betriebsfluidgemisch möglichst großflächig sowie platzsparend vorgeheizt werden. Der vorstehend beschriebene Injektor ist vorzugsweise in Projektion mittig oder im Wesentlichen mittig zum Heizmittel angeordnet. Dadurch kann das weitere Betriebsfluid möglichst gleichmäßig auf das Heizmittel aufgetragen werden, wodurch das weitere Betriebsfluid bzw. das Betriebsfluidgemisch effizient erhitzt werden kann. Dies führt wiederum zu einer effizienten Verbrennung im Katalysator. Da Brennstoff, beispielsweise in Form des weiteren Betriebsfluids, durch den Injektor direkt in die Mischkammer stromaufwärts des Katalysators eingebracht wird bzw. werden kann, besteht die Möglichkeit, die Brennstoffzufuhr und entsprechend eine Wärmezufuhr durch den Startbrenner schnell zu unterbinden, indem die Brennstoffzufuhr abgestellt wird.

Ferner kann bei einem Startbrenner gemäß der vorliegenden Erfindung das Heizmittel plattenförmig oder im Wesentlichen plattenförmig ausgestaltet sein. Dadurch kann das Heizmittel besonders platzsparend am Katalysator angeordnet werden. Das plattenförmige Heizmittel liegt vorzugsweise mit einer seiner beiden großen Seitenflächen am Katalysatoreingang an. Vorzugsweise weist das Heizmittel den gleichen oder im Wesentlichen den gleichen Querschnitt wie eine Stirnseite des Katalysatoreingangs auf. D.h., das Heizmittel erstreckt sich bevorzugt zumindest über die gesamte Stirnseite oder im Wesentlichen über die gesamte Stirnseite des Katalysators bzw. des Katalysatoreingangs. Mit anderen Worten, eine der beiden großen Seitenflächen des Heizmittels ist vorzugsweise deckungsgleich oder im Wesentlichen deckungsgleich mit der Stirnseite des Katalysators. Dadurch kann das Betriebsfluid bzw. das Betriebsfluidgemisch möglichst großflächig und trotzdem platzsparend vorgeheizt werden.

Bei einem erfindungsgemäßen Startbrenner ist es weiterhin möglich, dass nur eine Oberseite des plattenförmigen Heizmittels, insbesondere eine dem Katalysatoreingang abgewandte Oberseite des plattenförmigen Heizmittels, direkt heizbar ist. Bei Versuchen im Rahmen der vorliegenden Erfindung hat sich herausgestellt, dass das Betriebsfluidgemisch ausreichend vorgeheizt werden kann, wenn es auf eine geheizte Oberfläche eines plattenförmigen Heizmittels trifft bzw. durch diese hindurch in den Katalysator geleitet wird. Darüber hinaus hat sich gezeigt, dass sich durch das Heizen der einen Oberfläche während des Startvorgangs des Brennstoffzellensystems auch das restliche Heizmittel ausreichend erwärmt. Dadurch, dass nur eine Oberfläche bzw. ein einziger Oberflächenbereich des plattenförmigen Heizmittels direkt heizbar ist, kann bei einem Vorheizen des Betriebsfluidgemisches auch nur dieser Oberflächenbereich direkt geheizt, beispielsweise direkt bestromt, werden. Im Vergleich zu einem Fall, in welchem das gesamte Heizmittel direkt geheizt wird, kann der Startbrenner energiesparender und entsprechend effizienter und kostengünstiger betrieben werden. Ein energiesparender Betrieb ist außerdem insbesondere bei einer mobilen Anwendung des Startbrenners, beispielsweise im Automobilbereich, von Vorteil.

Von weiterem Vorteil kann es sein, wenn bei einem erfindungsgemäßen Startbrenner das Heizmittel eine Aktivierungseinheit aufweist, durch welche ein Heizbetrieb des Heizmittels aktivierbar und deaktivierbar ist. Dadurch kann ein sequentielles Betreiben bzw. Hochfahren des Startbrenners ermöglicht werden. Das Heizmittel kann zunächst so lange zum Heizen bzw. Vorheizen des Betriebsfluidgemisches aktiviert sein, bis im Startbrenner bzw. im Katalysator eine definierte Betriebstemperatur erreicht ist. Sobald die definierte Betriebstemperatur erreicht ist, kann das Heizmittel deaktiviert werden. Dadurch kann der Startbrenner mit den bereits vorstehend genannten Vorteilen besonders energiesparend betrieben werden, wodurch die Effizienz des gesamten Brennstoffzellensystems gesteigert werden kann.

Gemäß eines weiteren Aspekts der vorliegenden Erfindung wird ein Brennstoffzellensystem mit einem wie vorstehend im Detail dargestellten Startbrenner zur Verfügung gestellt. Das Brennstoffzellensystem weist ferner einen Nachbrenner und einen Reformer auf, wobei der Nachbrenner zum Erwärmen des Reformers und der Startbrenner zum Erwärmen des Nachbrenners angeordnet und ausgestaltet sind. Damit bringt ein erfindungsgemäßes Brennstoffzellensystem die gleichen Vorteile mit sich, wie sie ausführlich mit Bezug auf den erfindungsgemäßen Startbrenner beschrieben worden sind. Das Brennstoffzellensystem ist bevorzugt ein SOFC-System. Der Reformer ist bevorzugt zum Reformieren eines Brennstoffgemischs, beispielsweise Ethanol und Wasser, in ein anderes Brennstoffgemisch, in diesem Fall Wasserstoff und Kohlendioxid, ausgestaltet. Der reformierte Wasserstoff kann in einem Brennstoffzellenstapel zur Stromerzeugung verwendet werden. Der Nachbrenner ist zum Erwärmen des Reformers mittels Anodenabgas vom Brennstoffzellenstapel ausgestaltet. Bei einer vorteilhaften Weiterbildung der vorliegenden Erfindung ist es möglich, dass ein Betriebsfluid-Zuführabschnitt, durch welchen dem Betriebsfluid-Leitabschnitt beispielsweise Luft zugeführt wird, zumindest abschnittsweise entlang eines Außenwandabschnitts des Betriebsfluid-Zuführabschnitts angeordnet ist. Dadurch ist es auf platzsparende Weise möglich, dass das zugeführte Betriebsfluid bereits im Betriebsfluid-Zuführabschnitt vorgewärmt wird. Außerdem kann dadurch ein weiterer thermischer Isolationsabschnitt zur thermischen Abschirmung des Startbrenners geschaffen werden. Zum Erwärmen des Reformers ist der Nachbrenner bevorzugt zumindest abschnittsweise ringförmig um den Reformer herum angeordnet.

Ein weiterer Aspekt der vorliegenden Erfindung betrifft ein Verfahren zum Erwärmen eines Betriebsfluids in einem wie vorstehend dargestellten Brennstoffzellensystem. Erfindungsgemäß wird das Betriebsfluid durch den Betriebsfluid-Leitabschnitt außerhalb des Katalysators zumindest abschnittsweise entlang der Katalysatorwandung, insbesondere über die gesamte Länge der Katalysatorwandung, in Richtung des Katalysatoreingangs geleitet. Damit bringt auch ein erfindungsgemäßes Verfahren die gleichen Vorteile mit sich, wie sie vorstehend ausführlich mit Bezug auf den erfindungsgemäßen Startbrenner sowie das erfindungsgemäße Brennstoffzellensystem beschrieben worden sind. Weiterhin ist es möglich, dass das Betriebsfluid bei einem erfindungsgemäßen Verfahren durch den Betriebsfluid-Leitabschnitt außerhalb des Katalysators zumindest abschnittsweise entlang der Katalysatorwandung entgegengesetzt der Durchgangsrichtung zu einem Heizmittel geleitet wird, das sich stromaufwärts des Katalysatoreingangs, insbesondere direkt oder im Wesentlichen direkt am Katalysatoreingang befindet, und anschließend durch das Heizmittel hindurch in den Katalysebereich. Hierbei ist ein sequentielles Betreiben bzw. Hochfahren des Startbrenners möglich. So kann das Heizmittel zunächst so lange zum Heizen bzw. Vorheizen des Betriebsfluids bzw. der Betriebsfluidmischung aktiviert sein, bis im Startbrenner bzw. im Katalysator eine definierte Betriebstemperatur erreicht ist. Sobald die definierte Betriebstemperatur erreicht ist, kann das Heizmittel deaktiviert werden.

Im Rahmen der vorliegenden Erfindung ist es ferner möglich, dass das Betriebsfluidgemisch von der Mischkammer auf das Heizmittel und von dort in den Katalysator geleitet wird. Ferner ist es möglich, dass das Heizmittel mit einem Temperatursensor zum Ermitteln einer Temperatur im Brennstoffzellensystem, insbesondere in einem Nachbrenner des Brennstoffzellensystems, in Kommunikationsverbindung steht, wobei ein Heizbetrieb des Heizmittels abhängig von einer definierten Temperatur, die durch den Temperatursensor im Brennstoffzellensystem bzw. im Nachbrenner ermittelt wird, aktiviert oder deaktiviert wird. Demnach wird das Heizmittel nur dann aktiviert, wenn es erforderlich ist. Dadurch kann der Startbrenner besonders energieeffizient betrieben werden.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder der Zeichnung hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Es zeigen jeweils schematisch:
- Figur 1: ein Blockdiagramm zum Darstellen eines Brennstoffzellensystems gemäß einer erfindungsgemäßen Ausführungsform,
- Figur 2: einen Startbrenner gemäß einer ersten Ausführungsform der vorliegenden Erfindung,
- Figur 3: einen Startbrenner gemäß einer zweiten Ausführungsform der vorliegenden Erfindung,
- Figur 4: einen Katalysator mit Fluidführungselementen und einem Heizmittel gemäß einer erfindungsgemäßen Ausführungsform,
- Figur 5: eine Zusammenschau mit einem Startbrenner gemäß der ersten Ausführungsform, einem Reformer und einem Nachbrenner zum Erläutern einer möglichen Funktionsweise des Startbrenners, und
- Figur 6: ein Blockdiagramm zum Darstellen eines Brennstoffzellensystems gemäß einer erfindungsgemäßen alternativen Ausführungsform.

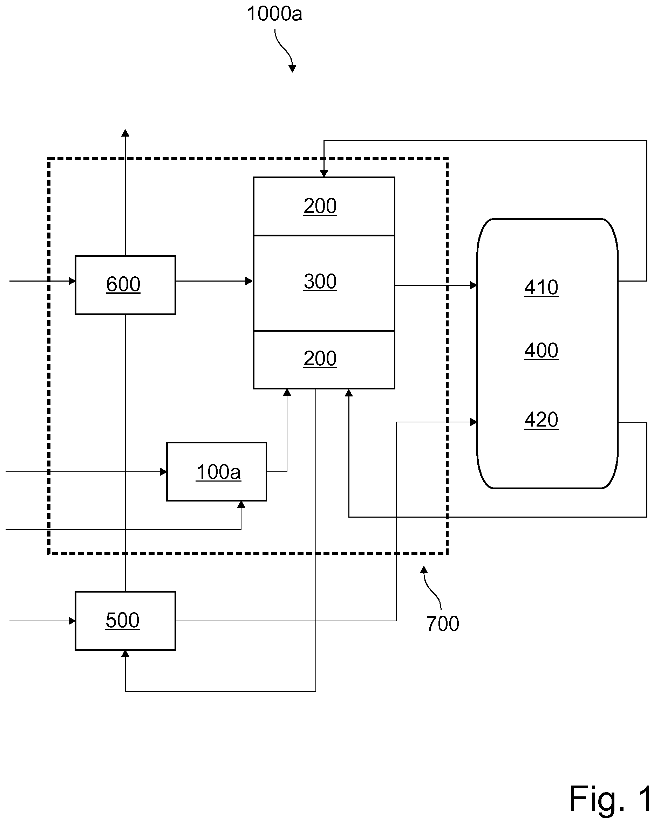

Elemente mit gleicher Funktion und Wirkungsweise sind in den Figuren 1 bis 6 jeweils mit denselben Bezugszeichen versehen.

Fig. 1 zeigt ein Blockdiagramm zum Darstellen eines Brennstoffzellensystems 1000a mit einem Startbrenner 100a. Das Brennstoffzellensystem 1000a weist ferner einen Nachbrenner 200 sowie einen Reformer 300 auf. Der Nachbrenner 200 ist zum Erwärmen des Reformers 300 ringförmig um den Reformer 300 herum angeordnet. Der Startbrenner 100a ist zum Erwärmen des Nachbrenners 200 und somit zum indirekten Erwärmen des Reformers 300 angeordnet und ausgestaltet. Demnach befindet sich der Startbrenner 100a stromaufwärts des Nachbrenners 200.

In Fig. 1 sind der Startbrenner 100a und der Nachbrenner 200 getrennt voneinander dargestellt. Im Rahmen der vorliegenden Erfindung ist es auch möglich, dass der Startbrenner 100a als integrale Einheit das Nachbrenners 200 ausgestaltet ist. Dadurch kann das Brennstoffzellensystem 1000a noch kompakter ausgestaltet werden. Das Brennstoffzellensystem 1000a gemäß Fig. 1 ist als SOFC-System ausgestaltet.

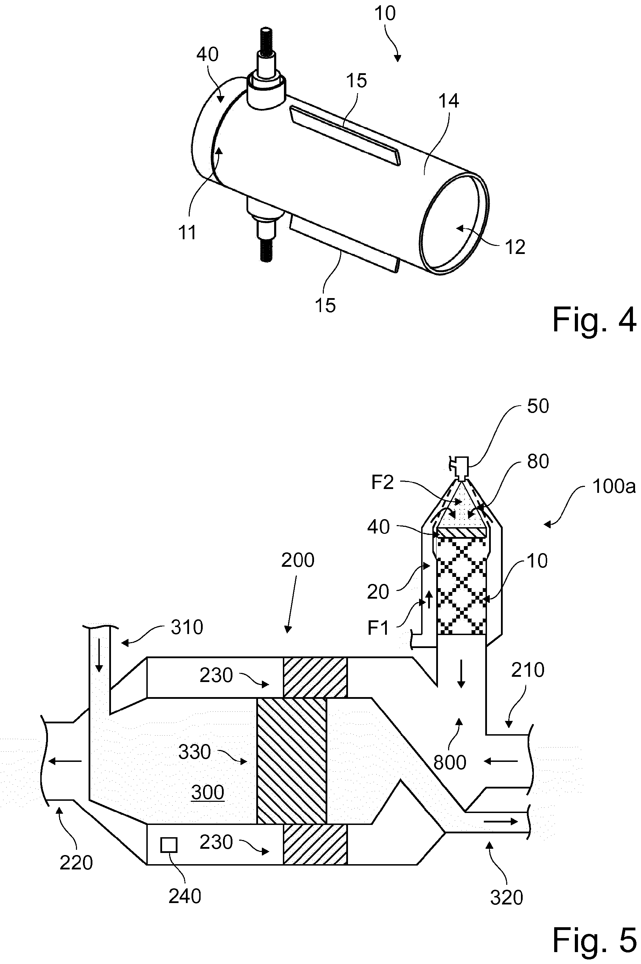

Stromabwärts des Reformers 300 ist ein Brennstoffzellenstapel 400 mit einem Anodenbereich 410 und einem Kathodenbereich 420 angeordnet. Ein Brennstoffgemisch, das durch den Reformer 300 erzeugt wird, wird zum Anodenbereich 410 geleitet. Anodenabgas wird in den Nachbrenner 200 geleitet, wo mittels einer Verbrennung des Anodenabgases der Reformer 300 erwärmt werden kann. Für die Verbrennung im Nachbrenner 200 weist dieser einen Nachbrennerkatalysator 230 (siehe z.B. Fig. 5) in Form eines Oxydationskatalysators auf. Das verbrannte Anodenabgas wird vom Reformer 300 zu einem Wärmetauscher 500 geleitet. Von dort wird das Abgas über einen Verdampfer 600 in die Umgebung des Brennstoffzellensystems 1000a geführt. Über den Wärmetauscher 500 wird dem Kathodenbereich 420 erwärmte Luft zugeführt. Kathodenabgas wird ebenfalls dem Nachbrenner 200 zugeführt.

Der Startbrenner 100a, der Nachbrenner 200, der Reformer 300 und der Verdampfer 600 befinden sich in dem Brennstoffzellensystem 1000a in einer sogenannten Hotbox 700, in welcher ein kompakter Wärmetransport zwischen den jeweiligen Bauteilen ermöglicht werden kann. Die zusammenhängenden Funktionen von Startbrenner 100a, Nachbrenner 200 und Reformer 300 werden später mit Bezug auf Fig. 5 im Detail beschrieben.

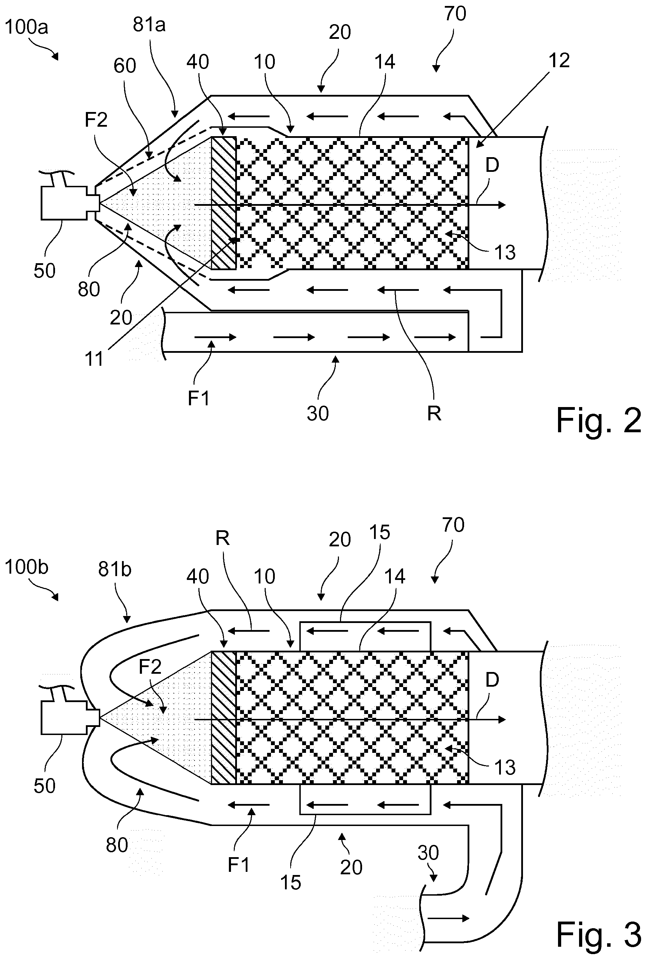

In Fig. 2 ist ein Startbrenner 100a für das in Fig. 1 dargestellte Brennstoffzellensystem 1000a im Detail dargestellt. Der Startbrenner 100a weist einen Katalysator 10 mit einem Katalysatoreingang 11 und einem Katalysatorausgang 12 auf, wobei zwischen dem Katalysatoreingang 11 und dem Katalysatorausgang 12 ein Katalysebereich 13 ausgestaltet ist. Der Katalysebereich 13 ist in einer Durchgangsrichtung D vom Katalysatoreingang 11 zum Katalysatorausgang 12 von einer Katalysatorwandung 14 umgeben.

Der Startbrenner 100a weist ferner einen Betriebsfluid-Leitabschnitt 20 zum Zuführen eines Betriebsfluids F1, gemäß Fig. 2 in Form von Luft, zu dem Katalysatoreingang 11 auf. Der Betriebsfluid-Leitabschnitt ist 20 außerhalb des Katalysators 10 entlang der Katalysatorwandung 14 angeordnet. Genauer gesagt ist der Betriebsfluid-Leitabschnitt 20 unter anderem von einem Bereich am Katalysatorausgang 12 bis zu einem Bereich am Katalysatoreingang 11 entlang der Katalysatorwandung 14 angeordnet und ausgestaltet.

Der Betriebsfluid-Leitabschnitt 20 gibt entlang der Katalysatorwandung 14 eine Leitrichtung R für das Betriebsfluid vor, wobei die Leitrichtung R parallel und entgegengesetzt zur Durchgangsrichtung D verläuft. Die Katalysatorwandung 14 ist in Form eines Hohlzylinders, genauer gesagt in Form eines gestuften Holzylinders ausgestaltet. Der Betriebsfluid-Leitabschnitt 20 ist ringförmig um die Katalysatorwandung 14 herum ausgestaltet.

Gemäß der in Fig. 2 dargestellten Ausführungsform ist der Betriebsfluid-Leitabschnitt 20 abschnittsweise direkt an der Katalysatorwandung 14 angeordnet. Genauer gesagt ist die Katalysatorwandung 14 in der dargestellten Ausführungsform als Trennwand zwischen dem Betriebsfluid-Leitabschnitt 20 und dem Katalysebereich 13 ausgestaltet. Fig. 2 kann grundsätzlich auch dahingehend verstanden werden, dass ein Außenwandabschnitt der Katalysatorwandung 14 einen Teil des Betriebsfluid-Leitabschnitts 20 bildet.

Wie ferner in Fig. 2 dargestellt, ist in einer Betriebsfluid-Strömungsrichtung zwischen einem Endabschnitt des Betriebsfluid-Leitabschnitts 20 und dem Katalysatoreingang 11 ein perforierter Trennabschnitt 60 angeordnet, durch welchen das Betriebsfluid F1 vom Betriebsfluid-Leitabschnitt 20 in Richtung des Katalysators 10 leitbar ist. Der perforierte Trennabschnitt 60 ist trichterförmig ausgestaltet. Perforiert bedeutet hier, dass der Trennabschnitt 60 mit Ausnehmungen ausgeführt ist, die z.B. regelmäßig in Form von Löchern oder Schlitzen oder anders geartet, auch in verschiedenen Kombinationen unterschiedlicher Varianten, realisiert sind.

Außerdem ist in Fig. 2 dargestellt, dass der perforierte Trennabschnitt 60 an eine Stirnseite der Katalysatorwandung 14 angrenzt, wobei die Katalysatorwandung 14 in einem Bereich des Katalysatoreingangs 11 einen größeren Querschnitt bzw. einen größeren Querschnittdurchmesser als der Katalysebereich 13 aufweist und sich die Katalysatorwandung 14 von diesem Bereich in Durchgangsrichtung D über einen Teil des Katalysebereichs 13 beabstandet zum Katalysebereich 13 erstreckt. Zwischen einem Innenwandabschnitt der Katalysatorwandung 14 und dem Katalysebereich 13 befindet sich demnach ein Freiraum. Der Betriebsfluid-Leitabschnitt 20 sowie der perforierte Trennabschnitt 60 sind als monolithischer Bestandteil eines Gehäusekörpers 70 des Startbrenners 100a ausgestaltet.

Der dargestellte Startbrenner 100a weist ein Einspritzelement bzw. einen Injektor 50 zum Einspritzen eines weiteren Betriebsfluids F2, vorliegend Ethanol, in eine Mischkammer 80 des Startbrenners 100a stromaufwärts des Katalysatoreingangs 11 auf. In der Mischkammer 80 kann das Betriebsfluid F1 mit dem weiteren Betriebsfluid F2 vermischt werden. Der perforierte Trennabschnitt 60, der die Mischkammer 80 umgibt oder im Wesentlichen umgibt, ist in Form eines Einspritztrichters des weiteren Betriebsfluids F2 bzw. etwas größer als dieser ausgestaltet. Der trichterförmige Trennabschnitt 60 ist koaxial zum Injektor 50 bzw. einer Einspritzdüse des Injektors 50 ausgestaltet.

Die Mischkammer 80 weist einen Umlenkabschnitt 81a zum Umlenken einer Strömungsrichtung des Betriebsfluids F1 von der Leitrichtung R in die Durchgangsrichtung D auf. Der Umlenkabschnitt 81a überlappt sich gemäß Fig. 2 teilweise mit der Mischkammer 80.

Der Startbrenner 100a gemäß Fig. 2 weist stromaufwärts des Katalysatoreingangs 11 und stromabwärts der Mischkammer 80 ein Heizmittel 40 in Form eines plattenförmigen, elektrischen Heizmittels 40 zum Erwärmen einer Betriebsfluidmischung aus dem Betriebsfluid F1 und dem weiteren Betriebsfluid F2 auf. Im dargestellten Ausführungsbeispiel weist das Heizmittel 40 so wie der Katalysator 10 einen runden Querschnitt auf und ist direkt am Katalysatoreingang 11 angeordnet. Das Heizmittel 40 ist zum Heizen des Fluidgemisches aktivierbar. Für den Fall, dass das Vorheizen des Fluidgemisches nicht mehr benötigt wird, ist das Heizmittel 40 deaktivierbar.

Das Betriebsfluid F1 wird gemäß Fig. 2 durch einen Betriebsfluid-Zuführabschnitt 30 zugeführt, der außerhalb des Betriebsfluid-Leitabschnitts 20 entlang einer Außenwandfläche des Betriebsfluid-Leitabschnitts 20 angeordnet und ausgestaltet ist.

In Fig. 3 ist ein Startbrenner 100b gemäß einer zweiten Ausführungsform dargestellt. Die zweite Ausführungsform entspricht im Wesentlichen der ersten Ausführungsform. Zur Vermeidung von Wiederholungen werden anschließend nur Unterscheidungsmerkmale zwischen der ersten und der zweiten Ausführungsform beschrieben.

Zunächst wurde gemäß der zweiten Ausführungsform auf den perforierten Trennabschnitt 60 verzichtet. Dadurch kann ein Druckverlust verhindert werden, der durch den perforierten Trennabschnitt 60 im Startbrenner 100b bzw. im Brennstoffzellensystem 1000a verursacht werden könnte. Der Umlenkabschnitt 81b dieser Ausführungsform weist einen Kurvenabschnitt bzw. einen sphärischen Abschnitt auf, durch welchen das Betriebsfluid F1 besonders reibungsarm in Richtung des Katalysatoreingangs 11 umleitbar und der Startbrenner 100b entsprechend wirkungsvoll betreibbar ist. Der Betriebsfluid-Zuführabschnitt 30 ist beabstandet zum Betriebsfluid-Leitabschnitt 20 ausgestaltet. Außerdem ist in Fig. 3 dargestellt, dass innerhalb eines freien Strömungsquerschnitts des Betriebsfluid-Leitabschnitts 20 zwei Fluidführungselemente 15 zur definierten Strömungsbeeinflussung des Betriebsfluids F1 ausgestaltet sind.

Durch Figuren 1 bis 3 wird ein Verfahren zum Erwärmen eines Betriebsfluids F1 in einem Brennstoffzellensystem 1000a dargestellt. Bei dem Verfahren wird Betriebsfluid F1 durch den Betriebsfluid-Leitabschnitt 20 außerhalb des Katalysators 10 abschnittsweise entlang der Katalysatorwandung 14 über die gesamte Länge der Katalysatorwandung 14 in Richtung des Katalysatoreingangs 11 geleitet. Genauer gesagt wird das Betriebsfluid F1 im Betriebsfluid-Leitabschnitt 20 von einem Bereich am Katalysatorausgang 12 zu einem Bereich am Katalysatoreingang 11 entlang der Leitrichtung R, und somit parallel und entgegengesetzt zur Durchgangsrichtung D, an der Katalysatorwandung 14 entlang und in Richtung des Katalysatoreingangs 11 geleitet. Bei dem Verfahren wird das Betriebsfluidgemisch ferner von der Mischkammer 80 auf das Heizmittel 40 und von dort in den Katalysator 10 geleitet. Genauer gesagt wird das erste Betriebsfluid F1 durch den Betriebsfluid-Leitabschnitt 20 außerhalb des Katalysators 10 entlang der Katalysatorwandung 14 über die gesamte Länge der Katalysatorwandung 14 in Richtung des Katalysatoreingangs 11 geleitet.

In Fig. 4 ist ein Katalysator 10 mit einem Katalysatoreingang 11, einem Katalysatorausgang 12 und einer Katalysatorwandung 14 dargestellt. Außerdem zeigt Fig. 4 ein Heizmittel 40, das direkt am Katalysatoreingang 11 angeordnet ist. Wie in Fig. 4 weiter zu erkennen ist, sind an der Katalysatorwandung 14 plattenförmige, lineare Fluidführungselemente 15 zur definierten Strömungsbeeinflussung eines Betriebsfluids F1 ausgestaltet. Die Fluidführungselemente 15 sind stoffschlüssig mit der Katalysatorwandung 14 verbunden und stehen von dieser radial hervor. Die Fluidführungselemente 15 erstrecken sich in ihrer Längsrichtung parallel zur Durchgangsrichtung D. Wenn ein solcher Katalysator 10 in einem wie in Fig. 2 oder Fig. 3 dargestellten Startbrenner 100a bzw. 100b verwendet wird sind die Fluidführungselemente 15 innerhalb eines Strömungsquerschnitts bzw. eines freien Strömungsquerschnitts des Betriebsfluid-Leitabschnitts 20 ausgestaltet.

Fig. 5 zeigt eine Zusammenschau mit einem Startbrenner 100a, der stromaufwärts eines Nachbrenners 200 angeordnet ist, wobei der Nachbrenner 200 ringförmig um einen Reformer 300 angeordnet ist. Der Nachbrenner 200 weist einen Nachbrennereingang 210 und einen Nachbrennerausgang 220 auf. Außerdem weist der Nachbrenner 200 einen Nachbrennerkatalysator 230 auf, der im vorliegenden Fall ringförmig ausgestaltet ist. Der Reformer 300 weist einen Reformereingang 310 und einen Reformerausgang 320 auf. Der Reformer 300 weist ferner einen Reformerkatalysator 330 auf.

Bei einem Start des Brennstoffzellensystems 1000a wird über den Betriebsfluid-Leitabschnitt 20 Betriebsfluid F1 in Form von Luft in die Mischkammer 80 geführt. Außerdem wird durch den Injektor 50 ein weiteres Betriebsfluid F2 in Form eines Brennstoffs in die Mischkammer 80 gespritzt. Das Betriebsfluidgemisch wird durch das Heizmittel 40 erwärmt und entsprechend vorgeheizt in den Katalysator 10 weitergeleitet. Dort wird das Betriebsfluidgemisch zumindest teilweise verbrannt. Verbranntes Fluid wird vom Katalysator 10 bzw. vom Startbrenner 100a in den Nachbrenner 200 geleitet. Dort kann es den Reformer 300 erwärmen.

Dem Reformer 300 wird über den Reformereingang 310 ein Brennstoffgemisch vom Verdampfer 600 zugeführt. Mittels des Reformerkatalysators 330 kann das Brennstoffgemisch, wie vorstehend beschrieben, in ein geeignetes Anoden-Zuführgas, beispielsweise Wasserstoff und Kohlendioxid, umgewandelt werden. Das Anoden-Zuführgas wird dem Anodenbereich 410 des Brennstoffzellenstapels 400 über den Reformerausgang 320 zugeführt. Nach einer chemischen Reaktion im Brennstoffzellenstapel 400 wird dem Nachbrenner 200 über den Nachbrennereingang 210 Anoden-Abgas sowie Kathoden-Abgas zugeführt, welches im Nachbrenner 200 mittels des Nachbrennerkatalysators 230 verbrannt wird. Durch diese Verbrennung kann der Reformer 300 ebenfalls erwärmt werden. Die erhitzten Fluide bzw. Abgase des Brennstoffzellenstapels 400 werden, wie in Fig. 5 dargestellt, zusammen mit dem verbrannten Fluid aus dem Startbrenner 100a in den Nachbrenner 200 geführt. Hierzu ist zwischen dem Startbrenner 100a und dem Nachbrenner 200 ein geeigneter Fluid-Verbindungsabschnitt 800 ausgestaltet. Sobald der Reformer 300 eine definierte Betriebstemperatur erreicht hat, kann der Startbrenner 100a deaktiviert werden, d.h., in den Startbrenner 100a werden in diesem Fall kein Brennstoff und keine Luft mehr eingeleitet.

Das Heizmittel 40 steht mit einem Temperatursensor 240, der im Nachbrenner 200 angeordnet ist, in Kommunikationsverbindung. Ein Heizbetrieb des Heizmittels 40 kann deshalb abhängig von einer definierten Temperatur, die durch den Temperatursensor 240 ermittelt wird, aktiviert oder deaktiviert werden.

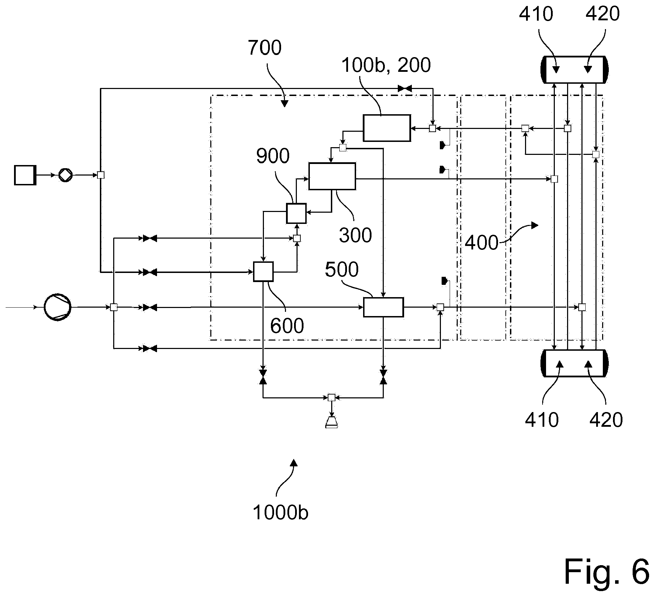

In Fig. 6 ist ein Brennstoffzellensystem 1000b gemäß einer weiteren Ausführungsform dargestellt. Wie in Fig. 6 zu erkennen ist, wird der Startbrenner 100b gleichzeitig als Nachbrenner 200 verwendet. Genauer gesagt, sind der Startbrenner 100b und der Nachbrenner 200 als ein gemeinsames, integrales Bauteil, in Form eines Brenners, ausgebildet. Abhängig von einem Betriebszustand des Brennstoffzellensystems 1000b wird der Brenner als Startbrenner 100b oder Nachbrenner 200 genutzt. Der Startbrenner 100b ist gemäß Fig. 6 dazu ausgebildet, insbesondere flüssigen Brennstoff katalytisch zu verbrennen, wofür der Startbrenner 100b ein katalytisches Material umfasst. Der Betrieb des Startbrenners 100b erfolgt analog wie oben beschrieben. Grundsätzlich ist der Brenner entsprechend dem erfindungsgemäßen Startbrenner 100a ausgebildet. Nimmt der Brenner die Funktion eines Nachbrenners 200 ein, so wird diesem in einem zweiten Betriebsfluidleitabschnitt Anodenabgas oder Brennstoffzellenabgas (Anodenabgas und Kathodenabgas) zugeführt, um dieses vollständig zu verbrennen. Da Kathodenabgas insbesondere ausschließlich Luft ist, wird das Anodenabgas im als Nachbrenner 200 arbeitenden Startbrenner 100b mit dem Kathodenabgas verbrannt.

Das in Fig. 6 dargestellte Brennstoffzellensystem 1000b weist ferner zumindest einen Wärmetauscher 900 und einen Verdampfer 600 zum Aufheizen und Verdampfen von Brennstoff für den Reformer 300 auf. Ein weiterer Wärmetauscher 500 ist in einem Kathodenzuführabschnitt angeordnet. Über eine kalte Seite dieses Wärmetauschers 500 wird Luft dem Kathodenabschnitt 420 zugeführt. Die Luft wird über das im Nachbrenner 200 vollständig verbrannte Brennstoffzellenstapelabgas erwärmt. Stromabwärts des Startbrenners 100b bzw. Nachbrenners 200 wird der Brennstoffzellenstapelabgasstrom getrennt, wobei ein Teil davon über den Wärmetauscher 500 insbesondere an die Umgebung abgegeben wird. Der zweite Teil wird über eine warme Seite des Reformers 300, des Wärmetauschers 900 und des Verdampfers 600 ebenfalls an die Umgebung abgegeben.

### Bezugszeichenliste

- 10: Katalysator
- 11: Katalysatoreingang
- 12: Katalysatorausgang
- 13: Katalysebereich
- 14: Katalysatorwandung
- 15: Fluidführungselement
- 20: Betriebsfluid-Leitabschnitt
- 30: Betriebsfluid-Zuführabschnitt
- 40: Heizmittel
- 50: Injektor
- 60: perforierter Trennabschnitt
- 70: Gehäusekörper
- 80: Mischkammer
- 81a: Umlenkabschnitt
- 81b: Umlenkabschnitt
- 100a: Startbrenner
- 100b: Startbrenner
- 200: Nachbrenner
- 210: Nachbrennereingang
- 220: Nachbrennerausgang
- 230: Nachbrennerkatalysator
- 240: Temperatursensor
- 300: Reformer
- 310: Reformereingang
- 320: Reformerausgang
- 330: Reformerkatalysator
- 400: Brennstoffzellenstapel
- 410: Anodenbereich
- 420: Kathodenbereich
- 500: Wärmetauscher
- 600: Verdampfer
- 700: Hotbox
- 800: Fluid-Verbindungsabschnitt
- 900: Wärmetauscher
- 1000a: Brennstoffzellensystem
- 1000b: Brennstoffzellensystem
- D: Durchgangsrichtung
- F1: Betriebsfluid
- F2: weiteres Betriebsfluid
- R: Leitrichtung

## Patentansprüche

1. Startbrenner (100a; 100b) für ein Brennstoffzellensystem (1000a; 1000b),aufweisend:
- einen Katalysator (10) mit einem Katalysatoreingang (11) und einem Katalysatorausgang (12), wobei zwischen dem Katalysatoreingang (11) und dem Katalysatorausgang (12) ein Katalysebereich (13) ausgestaltet ist und der Katalysebereich (13) in einer Durchgangsrichtung (D) vom Katalysatoreingang (11) zum Katalysatorausgang (12) von einer Katalysatorwandung (14) umgeben ist, und
- einen Betriebsfluid-Leitabschnitt (20) zum Zuführen eines Betriebsfluids (F1) zu dem Katalysatoreingang (11),
**dadurch gekennzeichnet,**
**dass** der Betriebsfluid-Leitabschnitt (20) außerhalb des Katalysators (10) zumindest abschnittsweise entlang der Katalysatorwandung (14) angeordnet ist, und
**dass** wenigstens ein Injektor (50), zum Einspritzen eines weiteren Betriebsfluids (F2) in eine Mischkammer (80) des Startbrenners (100a; 100b) stromaufwärts des Katalysatoreingangs (11), angeordnet ist, wobei die Mischkammer (80) zum Vermischen des Betriebsfluids (F1) mit dem weiteren Betriebsfluid (F2) angeordnet und ausgestaltet ist.

2. Startbrenner (100a; 100b) nach Anspruch 1,
**dadurch gekennzeichnet,**
**dass** der Betriebsfluid-Leitabschnitt (20) entlang der Katalysatorwandung (14) eine Leitrichtung (R) für das Betriebsfluid (F1) vorgibt, wobei die Leitrichtung (R) zumindest abschnittsweise parallel oder im spitzen Winkel und entgegengesetzt zur Durchgangsrichtung (D) verlauft.

3. Startbrenner (100a; 100b) nach einem der voranstehenden Anspruche,
**dadurch gekennzeichnet,**
**dass** die Katalysatorwandung (14) zumindest abschnittsweise in Form eines Hohlzylinders ausgestaltet ist und der Betriebsfluid-Leitabschnitt (20) wenigstens teilweise ringförmig, zumindest abschnittsweise um die Katalysatorwandung (14) herum, ausgestaltet ist.

4. Startbrenner (100a; 100b) nach einem der voranstehenden Anspruche,
**dadurch gekennzeichnet,**
**dass** der Betriebsfluid-Leitabschnitt (20) zumindest abschnittsweise direkt oder im Wesentlichen direkt an der Katalysatorwandung (14) angeordnet ist oder die Katalysatorwandung (14) als Trennwand zwischen dem Betriebsfluid-Leitabschnitt (20) und dem Katalysebereich (13) ausgestaltet ist.

5. Startbrenner (100b) nach einem der voranstehenden Anspruche,
**dadurch gekennzeichnet,**
**dass** der Betriebsfluid-Leitabschnitt (20) einen Strömungsquerschnitt zum Leiten des Betriebsfluids aufweist, wobei innerhalb des Strömungsquerschnitts wenigstens ein Fluidführungselement (15) zur definierten Strömungsbeeinflussung des Betriebsfluids (F1) im Betriebsfluid-Leitabschnitt (20) ausgestaltet ist, insbesondere wobei das wenigstens eine Fluidführungselement (15) an der Katalysatorwandung (14) ausgestaltet ist, insbesondere als integraler Bestandteil der Katalysatorwandung (14).

6. Startbrenner (100a) nach einem der voranstehenden Anspruche,
**dadurch gekennzeichnet,**
**dass** in einer Betriebsfluid-Strömungsrichtung zwischen einem Endabschnitt des Betriebsfluid-Leitabschnitts (20) und dem Katalysatoreingang (11) ein perforierter Trennabschnitt (60) angeordnet ist, durch welchen das Betriebsfluid (F1) vom Betriebsfluid-Leitabschnitt (20) in Richtung des Katalysators (10) leitbar ist, insbesondere wobei der perforierte Trennabschnitt (60) trichterförmig oder im Wesentlichen trichterförmig ausgestaltet ist.

7. Startbrenner (100a) nach Anspruch 6,
**dadurch gekennzeichnet,**
**dass** der perforierte Trennabschnitt (60) an einen Stirnabschnitt der Katalysatorwandung (14) angrenzt, wobei die Katalysatorwandung (14) in einem Bereich des Katalysatoreingangs (11) einen größeren Querschnitt als der Katalysebereich (13) aufweist und sich die Katalysatorwandung (14) von diesem Bereich in Durchgangsrichtung (D) zumindest über einen Teil des Katalysebereichs (13) beabstandet zum Katalysebereich (13) erstreckt.

8. Startbrenner (100a) nach einem der Anspruche 6 oder 7,
**dadurch gekennzeichnet,**
**dass** der Betriebsfluid-Leitabschnitt (20) zumindest abschnittsweise als Bestandteil eines Gehäusekörpers (70) des Startbrenners (100a) ausgestaltet ist, wobei der perforierte Trennabschnitt (60) als Bestandteil, insbesondere als integraler und/oder monolithischer Bestandteil, des Gehäusekörpers (70) ausgestaltet ist.

9. Startbrenner (100a; 100b) nach einem der voranstehenden Anspruche,
**dadurch gekennzeichnet,**
**dass** die Mischkammer (80) einen Umlenkabschnitt (81 a; 81 b), zum Umlenken einer Strömungsrichtung des Betriebsfluids (F1) von der Leitrichtung (R) in die Durchgangsrichtung (D), aufweist.

10. Startbrenner (100a; 100b) nach einem der voranstehenden Anspruche,
**dadurch gekennzeichnet,**
**dass** stromaufwärts des Katalysatoreingangs (11), insbesondere stromaufwärts des Katalysatoreingangs (11) und stromabwärts der Mischkammer (80), ein Heizmittel (40), insbesondere ein elektrisches Heizmittel (40), zum Erwärmen einer Betriebsfluidmischung aus dem Betriebsfluid (F1) und dem weiteren Betriebsfluid (F2) angeordnet ist, insbesondere wobei das Heizmittel (40) plattenförmig oder im Wesentlichen plattenförmig ausgestaltet ist.

11. Startbrenner (100a; 100b) nach Anspruch 10,
**dadurch gekennzeichnet,**
**dass** nur eine Oberseite des plattenförmigen Heizmittels (40), insbesondere eine dem Katalysatoreingang (11) abgewandte Oberseite des plattenförmigen Heizmittels (40), direkt heizbar ist.

12. Startbrenner (100a; 100b) nach einem der Anspruche 10 oder 11,
**dadurch gekennzeichnet,**
**dass** das Heizmittel (40) eine Aktivierungseinheit aufweist, durch welche ein Heizbetrieb des Heizmittels (40) aktivierbar und deaktivierbar ist.

13. Brennstoffzellensystem (1000a) mit einem Startbrenner (100a) nach einem der voranstehenden Anspruche, ferner aufweisend einen Nachbrenner (200) und einen Reformer (300), wobei der Nachbrenner (200) zum Erwärmen des Reformers (300) und der Startbrenner (100a) zum Erwärmen des Nachbrenners (200) angeordnet und ausgestaltet sind.

14. Verfahren zum Erwärmen eines Betriebsfluids (F1) in einem Brennstoffzellensystem (1000a) nach Anspruch 13, wobei das Betriebsfluid (F1) durch den Betriebsfluid-Leitabschnitt (20) außerhalb des Katalysators (10) zumindest abschnittsweise entlang der Katalysatorwandung (14), insbesondere über die gesamte Länge der Katalysatorwandung (14), in Richtung des Katalysatoreingangs (11) geleitet wird.

15. Verfahren nach Anspruch 14, wobei das Betriebsfluidgemisch von der Mischkammer (80) auf das Heizmittel (40) und von dort in den Katalysator (10) geleitet wird, insbesondere wobei das Heizmittel (40) mit einem Temperatursensor (240) zum Ermitteln einer Temperatur im Brennstoffzellensystem (1000a), insbesondere in einem Nachbrenner (200) des Brennstoffzellensystems (1000a), in Kommunikationsverbindung steht, wobei ein Heizbetrieb des Heizmittels (40) abhängig von einer definierten Temperatur, die durch den Temperatursensor (240) im Brennstoffzellensystem (1000a) bzw. im Nachbrenner (200) ermittelt wird, aktiviert oder deaktiviert wird.

## Claims

1. Ignition burner (100a; 100b) for a fuel cell system (1000a; 1000b), comprising:
- a catalytic converter (10) having a catalytic converter inlet (11) and a catalytic converter outlet (12), a catalysis region (13) being formed between the catalytic converter inlet (11) and the catalytic converter outlet (12) and the catalysis region (13) being surrounded, in a direction of passage (D) from the catalytic converter inlet (11) to the catalytic converter outlet (12), by a catalytic converter wall (14), and
- an operating fluid guiding portion (20) for supplying an operating fluid (F1) to the catalytic converter inlet (11),
**characterised in that**
the operating fluid guiding portion (20) is arranged outside the catalytic converter (10) at least in portions along the catalytic converter wall (14), and
at least one injector (50) for injecting another operating fluid (F2) into a mixing chamber (80) of the ignition burner (100a; 100b) upstream of the catalytic converter inlet (11) is provided, the mixing chamber (80) being provided and designed for mixing the operating fluid (F1) with the other operating fluid (F2).

2. Ignition burner (100a; 100b) according to claim 1,
**characterised in that**
the operating fluid guiding portion (20) defines a guiding direction (R) for the operating fluid (F1) along the catalytic converter wall (14), the guiding direction (R) at least in portions extending parallel or at an acute angle and counter to the direction of passage (D).

3. Ignition burner (100a; 100b) according to any of the preceding claims,
**characterised in that**
the catalytic converter wall (14) is designed at least in portions in the form of a hollow cylinder and the operating fluid guiding element (20) is designed to be at least partially annular, at least in portions around the catalytic converter wall (14).

4. Ignition burner (100a; 100b) according to any of the preceding claims,
**characterised in that**
the operating fluid guiding portion (20) is arranged at least in portions directly or substantially directly against the catalytic converter wall (14) or the catalytic converter wall (14) is designed as a separating wall between the operating fluid guiding portion (20) and the catalysis region (13).

5. Ignition burner (100b) according to any of the preceding claims,
**characterised in that**
the operating fluid guiding portion (20) has a flow cross-section for guiding the operating fluid, at least one fluid guiding element (15) within the flow cross-section being designed to influence the flow of the operating fluid (F1) in a defined manner in the operating fluid guiding portion (20), the at least one fluid guiding element (15) in particular being formed on the catalytic converter wall (14), in particular as an integral part of the catalytic converter wall (14).

6. Ignition burner (100a) according to any of the preceding claims,
**characterised in that**
a perforated separating portion (60) through which the operating fluid (F1) can be guided by the operating fluid guiding portion (20) towards the catalytic converter (10) is arranged, in a direction of flow of the operating fluid, between an end portion of the operating fluid guiding portion (20) and the catalytic converter inlet (11), the perforated separating portion (60) being funnel-shaped or substantially funnel-shaped.

7. Ignition burner (100a) according to claim 6,
**characterised in that**
the perforated separating portion (60) adjoins a front portion of the catalytic converter wall (14), the catalytic converter wall (14) having a larger cross-section than the catalysis region (13) in a region of the catalytic converter inlet (11) and the catalytic converter wall (14) extending from this region in the direction of passage (D) at least over part of the catalysis region (13) at a distance from the catalysis region (13).

8. Ignition burner (100a) according to any of claims 6 or 7,
**characterised in that**
the operating fluid guiding portion (20) is designed at least in portions as part of a housing body (70) of the ignition burner (100a), the perforated separating portion (60) being designed as part, in particular as an integral and/or monolithic part, of the housing body (70).

9. Ignition burner (100a; 100b) according to any of the preceding claims,
**characterised in that**
the mixing chamber (80) comprises a deflection portion (81 a; 81 b) for deflecting a direction of flow of the operating fluid (F1) from the guiding direction (R) into the direction of passage (D).

10. Ignition burner (100a; 100b) according to any of the preceding claims,
**characterised in that**
a heating means (40), in particular an electrical heating means (40), for heating an operating fluid mixture consisting of the operating fluid (F1) and the other operating fluid (F2) is arranged upstream of the catalytic converter inlet (11), in particular upstream of the catalytic converter inlet (11) and downstream of the mixing chamber (80), the heating means (40) in particular being planar or substantially planar.

11. Ignition burner (100a; 100b) according to claim 10,
**characterised in that**
only one upper face of the planar heating means (40), in particular an upper face of the planar heating means (40) that faces away from the catalytic converter inlet (11), is directly heatable.

12. Ignition burner (100a; 100b) according to any of claims 10 or 11,
**characterised in that**
the heating means (40) comprises an activation unit, by means of which a heating operation of the heating means (40) can be activated and deactivated.

13. Fuel cell system (1000a) comprising an ignition burner (100a) according to any of the preceding claims, further comprising an afterburner (200) and a reformer (300), wherein the afterburner (200) is provided and designed for heating the reformer (300) and the ignition burner (100a) is provided and designed for heating the afterburner (200).

14. Method for heating an operating fluid (F1) in a fuel cell system (1000a) according to claim 13, wherein the operating fluid (F1) is guided towards the catalytic converter inlet (11) through the operating fluid guiding portion (20) outside the catalytic converter (10) at least in portions along the catalytic converter wall (14), in particular over the entire length of the catalytic converter wall (14).

15. Method according to claim 14, wherein the operating fluid mixture is guided from the mixing chamber (80) onto the heating means (40) and from there into the catalytic converter (10), in particular wherein the heating means (40) is in communication with a temperature sensor (240) for determining a temperature in the fuel cell system (1000a), in particular in an afterburner (200) of the fuel cell system (1000a), wherein a heating operation of the heating means (40) is activated or deactivated depending on a defined temperature determined by the temperature sensor (240) in the fuel cell system (1000a) or in the afterburner (200) .

## Revendications

1. Brûleur d'allumage (100a ; 100b) pour un système de cellule à combustible (1000a ; 1000b), comprenant :
- un convertisseur catalytique (10) ayant une entrée de convertisseur catalytique (11) et une sortie de convertisseur catalytique (12), une région de catalyse (13) étant formée entre l'entrée de convertisseur catalytique (11) et la sortie de convertisseur catalytique (12) et la région de catalyse (13) étant entourée, dans une direction de passage (D) de l'entrée de convertisseur catalytique (11) à la sortie de convertisseur catalytique (12), par une paroi de convertisseur catalytique (14), et
- une partie de guidage de fluide de travail (20) destinée à fournir un fluide de travail (F1) à l'entrée de convertisseur catalytique (11),
**caractérisé en ce que**
la partie de guidage de fluide de travail (20) est agencée à l'extérieur du convertisseur catalytique (10) au moins dans des parties le long de la paroi de convertisseur catalytique (14), et
au moins un injecteur (50) destiné à injecter un autre fluide de travail (F2) jusque dans une chambre de mélange (80) du brûleur d'allumage (100a ; 100b) en amont de l'entrée de convertisseur catalytique (11) est fourni, la chambre de mélange (80) étant fournie et conçue pour mélanger le fluide de travail (F1) avec l'autre fluide de travail (F2).

2. Brûleur d'allumage (100a ; 100b) selon la revendication 1,
**caractérisé en ce que**
la partie de guidage de fluide de travail (20) définit une direction de guidage (R) pour le fluide de travail (F1) le long de la paroi de convertisseur catalytique (14), la direction de guidage (R) au moins dans des parties s'étendant parallèle ou à angle aigu et dans le sens contraire par rapport à la direction de passage (D).

3. Brûleur d'allumage (100a ; 100b) selon l'une quelconque des revendications précédentes,
**caractérisé en ce que**
la paroi de convertisseur catalytique (14) est conçue au moins dans des parties sous la forme d'un cylindre creux et l'élément de guidage de fluide de travail (20) est conçu pour être au moins partiellement annulaire, au moins dans des parties autour de la paroi de convertisseur catalytique (14) .

4. Brûleur d'allumage (100a ; 100b) selon l'une quelconque des revendications précédentes,
**caractérisé en ce que**
la partie de guidage de fluide de travail (20) est agencée au moins dans des parties directement ou substantiellement directement contre la paroi de convertisseur catalytique (14) ou la paroi de convertisseur catalytique (14) est conçue comme une paroi de séparation entre la partie de guidage de fluide de travail (20) et la région de catalyse (13).

5. Brûleur d'allumage (100b) selon l'une quelconque des revendications précédentes,
**caractérisé en ce que**
la partie de guidage de fluide de travail (20) a une section transversale d'écoulement destinée à guider le fluide de travail, au moins un élément de guidage de fluide (15) au sein de la coupe transversale d'écoulement étant conçu pour influencer l'écoulement du fluide de travail (F1) d'une manière définie dans la partie de guidage de fluide de travail (20), l'au moins un élément de guidage de fluide (15) en particulier étant formé sur la paroi de convertisseur catalytique (14), en particulier comme une partie intégrante de la paroi de convertisseur catalytique (14) .

6. Brûleur d'allumage (100a) selon l'une quelconque des revendications précédentes,
**caractérisé en ce que**
une partie de séparation perforée (60) à travers laquelle le fluide de travail (F1) peut être guidé par la partie de guidage de fluide de travail (20) vers le convertisseur catalytique (10) est agencée, dans une direction d'écoulement du fluide de travail, entre une partie d'extrémité de la partie de guidage de fluide de travail (20) et l'entrée de convertisseur catalytique (11), la partie de séparation perforée (60) étant en forme d'entonnoir ou substantiellement en forme d'entonnoir.

7. Brûleur d'allumage (100a) selon la revendication 6,
**caractérisé en ce que**
la partie de séparation perforée (60) est contigüe à une partie avant de la paroi de convertisseur catalytique (14), la paroi de convertisseur catalytique (14) ayant une section transversale plus grande que la région de catalyse (13) dans une région de l'entrée de convertisseur catalytique (11) et la paroi de convertisseur catalytique (14) s'étendant depuis cette région dans la direction de passage (D) au moins au-dessus d'une partie de la région de catalyse (13) à une distance de la région de catalyse (13).

8. Brûleur d'allumage (100a) selon l'une quelconque des revendications 6 ou 7,
**caractérisé en ce que**
la partie de guidage de fluide de travail (20) est conçue au moins dans des parties comme une partie d'un corps de logement (70) du brûleur d'allumage (100a), la partie de séparation perforée (60) étant conçue comme une partie, en particulier comme une partie intégrante et/ou monolithique, du corps de logement (70).

9. Brûleur d'allumage (100a ; 100b) selon l'une quelconque des revendications précédentes,
**caractérisé en ce que**
la chambre de mélange (80) comprend une partie de déviation (81a ; 81b) pour dévier une direction d'écoulement du fluide de travail (F1) de la direction de guidage (R) en la direction de passage (D).

10. Brûleur d'allumage (100a ; 100b) selon l'une quelconque des revendications précédentes,
**caractérisé en ce que**
un moyen de chauffage (40), en particulier un moyen de chauffage électrique (40), destiné à chauffer un mélange de fluides de travail constitué du fluide de travail (F1) et de l'autre fluide de travail (F2), est agencé en amont de l'entrée de convertisseur catalytique (11), en particulier en amont de l'entrée de convertisseur catalytique (11) et en aval de la chambre de mélange (80), le moyen de chauffage (40) en particulier étant plan ou substantiellement plan.

11. Brûleur d'allumage (100a ; 100b) selon la revendication 10,
**caractérisé en ce que**
seulement une face supérieure du moyen de chauffage plan (40), en particulier une face supérieure du moyen de chauffage plan (40) qui est tournée à l'opposé de l'entrée de convertisseur catalytique (11), peut être chauffée directement.

12. Brûleur d'allumage (100a ; 100b) selon l'une quelconque des revendications 10 ou 11,
**caractérisé en ce que**
le moyen de chauffage (40) comprend une unité d'activation, au moyen de laquelle une opération de chauffage du moyen de chauffage (40) peut être activée ou désactivée.

13. Système de cellule à combustible (1000a) comprenant un brûleur d'allumage (100a) selon l'une quelconque des revendications précédentes, comprenant en outre un post-brûleur (200) et un reformeur (300), dans lequel le post-brûleur (200) est fourni et conçu pour chauffer le reformeur (300) et le brûleur d'allumage (100a) est fourni et conçu pour chauffer le post-brûleur (200).

14. Procédé destiné à chauffer un fluide de travail (F1) dans un système de cellule à combustible (1000a) selon la revendication 13, dans lequel le fluide de travail (F1) est guidé vers l'entrée de convertisseur catalytique (11) à travers la partie de guidage de fluide de travail (20) à l'extérieur du convertisseur catalytique (10) au moins dans des parties le long de la paroi de convertisseur catalytique (14), en particulier au-dessus de toute la longueur de la paroi de convertisseur catalytique (14).

15. Procédé selon la revendication 14, dans lequel le mélange de fluides de travail est guidé de la chambre de mélange (80) jusque sur le moyen de chauffage (40) et de là jusque dans le convertisseur catalytique (10), en particulier dans lequel le moyen de chauffage (40) est en communication avec un capteur de température (240) destiné à déterminer une température dans le système de cellule à combustible (1000a), en particulier dans un post-brûleur (200) du système de cellule à combustible (1000a), dans lequel une opération de chauffage du moyen de chauffage (40) est activée ou désactivée en fonction d'une température définie déterminée par le capteur de température (240) dans le système de cellule à combustible (1000a) ou dans le post-brûleur (200).
